# FASCICULE DE BREVET EUROPEEN

(11) **EP 0 644 010 B1**
(45) Date de publication et mention de la délivrance du brevet: **16.04.1997**
(21) Numéro de dépôt: 94402046.0
(22) Date de dépôt: 14.09.1994
(51) Int. Cl.: B23H 9/10, B25B 11/00, B25B 5/14

(54) **Dispositif de bridage d'une pièce à travailler et application à l'usinage d'une pale de turbomachine par électrochimie**
Werkstück-Spannvorrichtung und Anwendung derselben zum elektrochemischen Bearbeiten von Turbinenschaufeln
Workpiece clamping device and use thereof for electrochemical machining of turbine blades

(30) Priorité: 16.09.1993 FR 9311024
(43) Date de publication de la demande: 22.03.1995
(73) Titulaire: SOCIETE NATIONALE D'ETUDE ET DE CONSTRUCTION DE MOTEURS D'AVIATION Snecma, F-75015 Paris (FR)
(72) Inventeur: Arnau, Jean-Philippe, F-95700 Roissy (FR)

(56) Documents cités:
- BE-A- 487 118
- DE-A- 1 765 853
- FR-A- 2 407 048
- GB-A- 1 586 459
- GB-A- 2 021 645
- US-A- 3 407 855
- US-A- 4 033 569

## Description

### Domaine de l'invention

L'invention concerne le bridage ou le blocage d'une pièce dans une position déterminée dans laquelle elle doit subir une ou plusieurs opérations, telles que de l'usinage et, en particulier, de l'usinage par électrochimie. Le système de bridage selon l'invention concerne en particulier le maintien des parties fragiles ou très minces de la pièce à travailler, parties susceptibles de bouger ou de vibrer pendant l'usinage.

### Art antérieur et problème posé

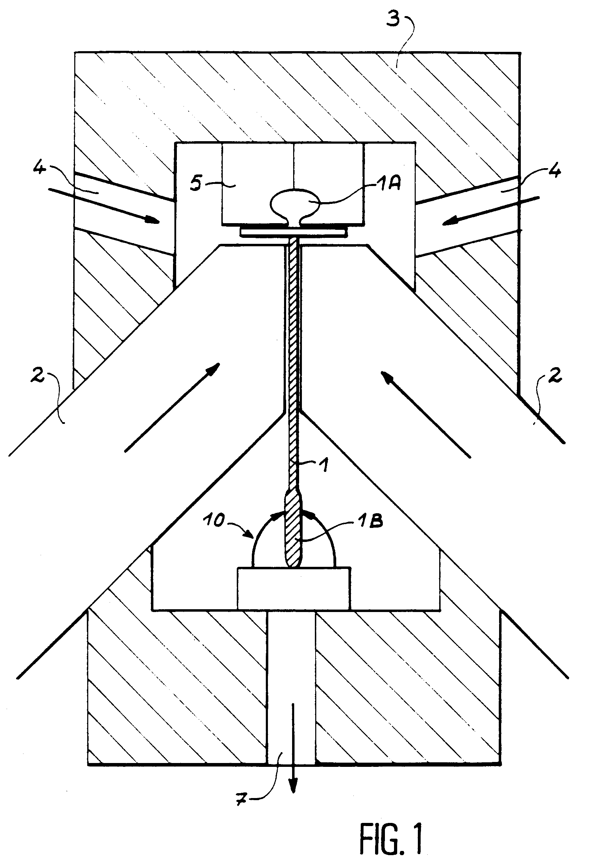

On fait référence tout d'abord à la figure 1. Dans le cadre de la fabrication d'aubes ou de pales de compresseurs de turbomachines, telles que des turboréacteurs, on éprouve le besoin de finir le façonnage des deux surfaces fonctionnelles des pales par usinage électrochimique. On signale que la pale est tout d'abord façonnée par forgeage sous la forme d'une ébauche.

La figure 1 qui représente cette phase de finition par électrochimie présente tous les éléments essentiels à cette opération, même dans le cas de l'art antérieur. En effet, on y distingue la pièce 1 fixée par son pied 1A dans un bloc de fixation 5. Le tout est placé à l'intérieur d'une cage d'usinage 3. La partie supérieure possède une ou plusieurs arrivées 4 de liquide électrochimique, la partie inférieure possède une sortie 7 du même liquide électrochimique. Une circulation de ce liquide électrochimique est donc organisée autour de la pale 1 à façonner.

Ce façonnage est obtenu grâce à deux électrodes 2 dont la forme des extrémités est complémentaire à celle des faces latérales de la pale 1. L'ébauche de la pale 1 étant fixée par son pied 1A dans le bloc de fixation 5, les électrodes 2 sont approchées de ces deux surfaces latérales de la pale 1. La pale est reliée à la borne positive du système, tandis que les électrodes 2 sont reliées à la borne négative. Ainsi, des ions sont arrachés aux deux surfaces latérales de la pale 1. Une avance régulière des électrodes permet ainsi, en quelques minutes, de réduire l'ébauche de la pale de 5 millimètres à une épaisseur d'environ 1 millimètre, voire moins.

A partir de telles épaisseurs réduites, des phénomènes de vibration interviennent, surtout si la pale dépasse plusieurs centimètres de longueur. Bien entendu, le phénomène de vibrations nuit à la qualité de la finition des deux faces de la pale 1.

Or, l'usinage électrochimique n'étant pas un usinage mécanique, la pièce à simplement besoin d'être positionnée correctement pendant l'usinage, contrairement à un usinage classique où il faut que la pièce soit très fermement bloquée sur le montage.

Néanmoins, le but de l'invention est de remédier aux inconvénients ci-dessus mentionnés en proposant un système de bridage de la pièce pour effectuer un usinage par électrochimie.

### Résumé de l'invention

A cet effet, l'objet principal de l'invention est un dispositif de bridage d'une partie libre et plate d'une pièce à travailler pour immobiliser complètement la pièce pendant le travail à effectuer sur celle-ci. Le dispositif comprend un socle et, selon l'invention :
- des moyens de serrage multi-points de la partie libre en plusieurs points répartis de part et d'autre des deux faces de la partie libre de la pièce à maintenir ; et
- un moyen unique de blocage des moyens de serrage en position de serrage.

Ces moyens de serrage comprennent de part et d'autre de la partie libre de la pièce, un premier patin de serrage monté excentré sur une première extrémité d'un axe de pivotement, lui-même monté pivotant dans un épaulement de serrage du socle, un premier levier étant monté à la deuxième extrémité de cet axe de pivotement, de sorte qu'une première pression sur les deux leviers aboutissent à une pression de chaque patin sur une face de la partie libre de la pièce, de façon à maintenir la partie libre de la pièce sur l'épaulement de serrage.

De préférence, le moyen de blocage comprend :
- un épaulement de serrage du socle dans lequel est monté tournant un axe de pivotement ;
- une vis de serrage traversant le socle et étant paralléle à l'axe ; et
- un premier flasque dans lequel est vissée la vis, de manière à être serré par la vis de serrage contre une première face latérale du premier patin.

Dans le cas où le nombre de points de serrage est égal à 4, les moyens de serrage possèdent de part et d'autre de la pièce, un deuxième patin de serrage monté excentré sur une première extrémité d'un tube de pivotement, monté lui-même pivotant autour de l'axe de pivotement du premier patin, un deuxième levier étant monté à sa deuxième extrémité, de sorte qu'une pression sur les leviers aboutissent à une pression sur chaque patin sur une face de la partie libre de la pièce, de façon à maintenir par quatre points de serrage entre les patins la partie libre de la pièce à maintenir.

Dans ce cas, on utilise un deuxième flasque libre en translation sur une deuxième extrémité de la tige de serrage pour être serrée contre une première face latérale du deuxième patin pour serrer au moyen de la vis ce patin contre un épaulement de serrage par leur deuxième face latérale.

Dans le cas d'un serrage à 2.N points, les moyens de serrage comprennent de part et d'autre N-2 patins supplémentaires montés chacun excentrés sur un tube concentrique à l'axe de pivotement et au premier tube de pivotement, les moyens de blocage comprennent N-2 entretoises de serrage supplémentaires de part et d'autre pour serrer chaque patin contre une face de serrage de l'épaulement de serrage ou d'une entretoise.

Une utilisation principale du dispositif selon l'invention est prévue pour maintenir une pale de turbomachine maintenue déjà par son pied, pour l'usinage final des faces de ces pales par électrochimie.

### Liste des figures

L'invention et ses différentes caractéristiques techniques seront mieux comprises à la lecture de la description, accompagnée de plusieurs figures représentant respectivement :
- figure 1, en coupe, l'utilisation du dispositif de bridage selon l'invention ;
- figure 2, en vue cavalière, le dispositif de bridage selon l'invention dans sa version à quatre points ; et
- figure 3, en vue éclatée, le dispositif de bridage selon l'invention.

### Description détaillée d'un mode de réalisation de l'invention

En se reportant de nouveau à la figure 1, le dispositif de bridage selon l'invention est repéré de manière générale par la référence 10. Il est positionné à l'intérieur du bloc d'usinage 3, en-dessous de la pale 1, de manière à maintenir l'extrémité libre 1B de cette pale 1. Des flèches symbolisent ce serrage. Ceci montre que, même si la pale 1, au cours de son usinage par électrochimie, dévient très fine, son extrémité auparavant libre 1B est maintenue. Cette dernière n'a plus aucune chance de vibrer.

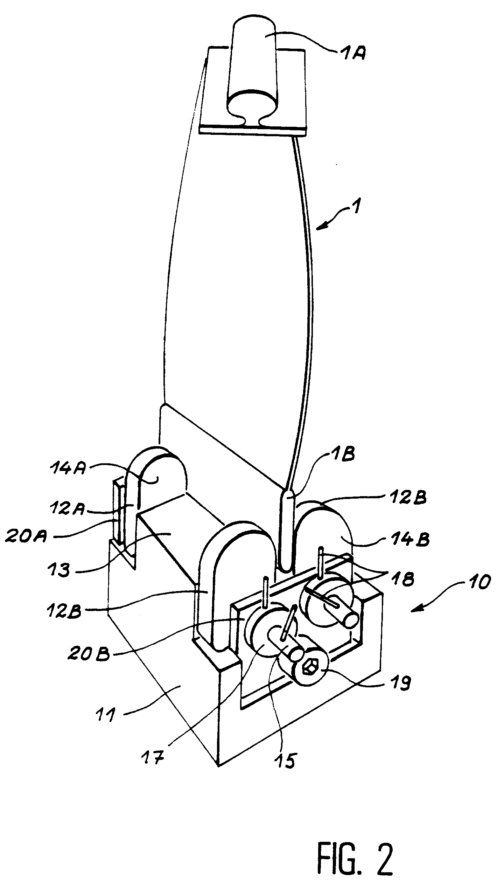

En référence à la figure 2, la pale 1 est représentée serrée par son extrémité libre 1B dans le dispositif de bridage selon l'invention 10. Dans le cas de la réalisation représentée sur cette figure 2, il s'agit d'un dispositif de bridage par quatre points de serrage. Ces derniers sont symbolisés par quatre patins, dont trois sont visibles. En l'occurrence, un premier patin 12A et deux deuxièmes patins 12B.

Le dispositif de bridage 10 est décrit dans les paragraphes suivants, en référence à son côté gauche qui est plus visible que son côté droit. Un tel dispositif de bridage comprend en outre un socle 11 qui possède sur chaque côté un épaulement de serrage 13 placé de façon centrale. Chaque épaulement de serrage 13 est traversé par un trou horizontal, non représenté, dans lequel est placé un axe de pivotement 15 entouré d'un tube de pivotement 17. L'axe de pivotement 15 est solidaire du premier patin 12A, tandis que le tube de pivotement 17 est solidaire d'un deuxième patin 12B. Les deux patins 12A et 12B sont placés de part et d'autre de l'épaulement de serrage 13. De plus, ils sont fixés sur leur axe de pivotement 15 et tube de pivotement 17 respectifs de manière excentrée. Ils peuvent ainsi effectuer, lorsque leur axe de pivotement 15 ou tube de pivotement 17 est tourné, un serrage d'une partie libre 1B de pale 1 placée au milieu du socle 11.

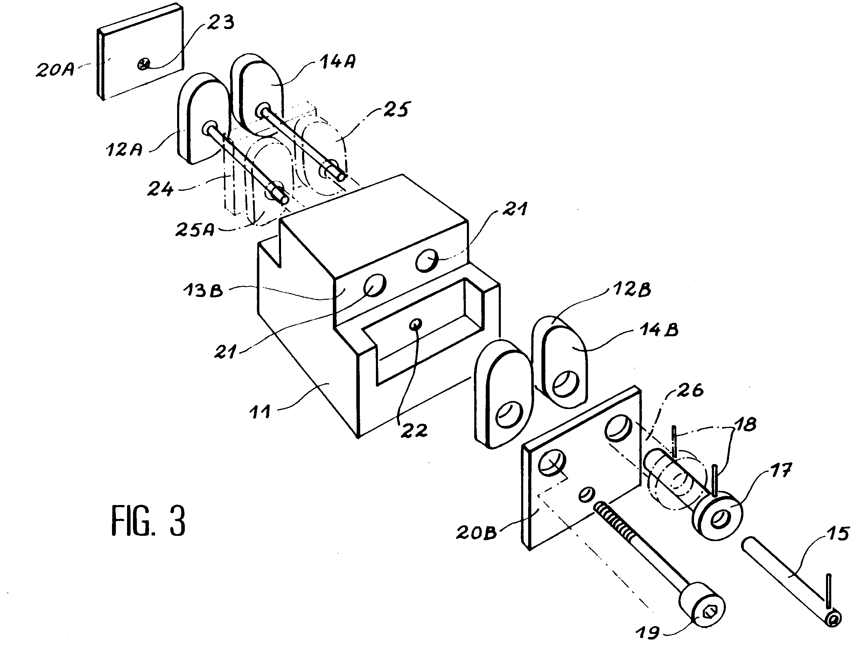

Il est ainsi possible de constituer une ligne d'un nombre N de points de serrage sur le base d'un nombre N-1 d'entretoises de serrage non représentées. Il suffit pour cela de prévoir un nombre total N-1 de tubes de pivotement concentriques 17 montés autour de l'axe de pivotement 15. Cette possibilité sera mieux décrite en regard de la figure 3.

Toujours en référence à la figure 2, le blocage en position de serrage des patins 12A et 12B est obtenu en tournant, soit l'axe de pivotement 15, soit le tube de pivotement 17 dont ils sont solidaires ; au moyen de petits leviers 18, solidaires chacun d'un de ces éléments de rotation. Ce serrage peut être effectué par un opérateur au moyen de plusieurs de ses doigts. Compte tenu du fait que la pression a exercer n'est pas intense, cette opération est faisable par une seule main, la deuxième main étant utilisée pour le blocage du système.

A cet effet, le système comprend une vis de serrage, repérée 19, par sa tête à six pans creux. Elle est montée libre en rotation dans le socle 11 et dépasse de l'autre côté de ce socle où elle est vissée dans un premier flasque 20A. La tête de la vis 19 est en appui en translation contre un deuxième flasque 20B. De cette manière, le vissage de la vis dans le premier flasque 20A sert l'empilement suivant : premier flasque 20A, premier patin 12A, épaulement de serrage 13, deuxième patin 12B et deuxième flasque 20B.

Tous les patins 12A et 12B sont ainsi bloqués dans leurs positions angulaires respectives déterminées, par les doigts de l'opérateur agissant sur les leviers 18. La pale 1 est ainsi bridée pour les opérations d'usinage par électrochimie.

En référence à la figure 3, le montage est représenté en vue éclatée. On retrouve sur cette figure 3, le socle 11, les patins 12A et 12B, les flasques 20A et 20B, la vis référencée 19 par sa tête.

Sur cette figure, on peut distinguer les trous 21 dans lesquels sont insérés les axes de pivotement 15 et les tubes de pivotement 17, une face d'appui 13B de l'épaulement de serrage sur lequel est serré le deuxième patin 12B. On a repéré 14A, la face de serrage du patin 12A contre l'épaulement de serrage 13.

On peut également distinguer le trou lisse 22 par lequel la vis de serrage traverse le bloc 11 et le trou taraudé 23 du premier flasque 20A de serrage par lequel la vis est vissée.

Sur cette figure 3, on a également représenté en traits interrompus une entretoise de serrage 24 et un patin supplémentaire 25. L'entretoise 24 est placée en regard de la face de serrage 14A du premier patin de serrage 12A sur laquelle elle peut être serrée. De l'autre côté, elle peut prendre appui sur une autre phase de serrage du patin supplémentaire 25. Ce dernier peut donc prendre appui par une phase de serrage 25A sur le bloc de serrage 11.

Ce patin supplémentaire 25 est solidaire d'un tube 26 concentrique à un axe de pivotement 15 et à un tube de pivotement 17. Son tube supplémentaire 26 possède également un levier de serrage 18 analogue aux autres.

On comprend qu'il est ainsi possible de rajouter des points de serrage en disposant dans les deux empilements un nombre déterminé N-2 de patins supplémentaires 25 et un même nombre N-2 d'entretoises de serrage 24 pour obtenir un système de bridage multi-points à 2.N points de serrage.

En référence aux figures 1 et 2, on rappelle qu'une utilisation préférentielle d'un tel dispositif de bridage est celle du maintien en position d'usinage par électrochimie d'une pale de turboréacteur, notamment le maintien de son extrémité libre 1B. En effet, compte tenu du fait que son épaisseur définitive peut être de l'ordre de 0,5 millimètre, un tel bridage empêche la pale 1 de vibrer sous la pression de la circulation de fluide électrochimique. Un gain de qualité et de coût de fabrication sont donc obtenus au moyen d'un tel bridage et permettent de produire en grande série de telles pales de turboréacteur.

## Revendications

1. Dispositif de bridage d'une partie (1B) libre et plate d'une pièce à travailler (1) pour immobiliser complètement cette pièce (1) pendant un travail à effectuer sur elle, le dispositif comprenant un socle (11),
caractérisé en ce qu'il comprend :
- des moyens de serrage multi-points de la partie libre (1B) en plusieurs points répartis de part et d'autre des deux faces de la partie libre (1B) ; ces moyens de serrage comprennent de part et d'autre de la partie libre (1B) de la pièce (1), un premier patin de serrage (12A) monté de façon excentrée sur une première extrémité d'un axe de pivotement (15), lui-même monté pivotant dans un épaulement de serrage (13) du socle (11), un premier levier (18) étant monté à la deuxième extrémité de l'axe de pivotement (15), de sorte qu'une pression sur le levier (18) aboutisse à une pression du patin (12A) sur une face de la partie libre (1B) de la pièce (1), de façon à maintenir la partie libre (1B) de la pièce (1) sur l'épaulement de serrage (13), et
- un moyen unique de blocage des moyens de serrage en position de serrage.

2. Dispositif de bridage selon la revendication 1, caractérisé en ce que les moyens de blocage comprennent :
- un épaulement de serrage (13) du socle (11) dans lequel est monté tournant un axe de pivotement (15) ;
- une vis de serrage (19) traversant le socle (11) et parallèle aux axes de pivotement (15) ; et
- un premier flasque (20A) dans lequel est vissée la vis (19) et susceptible d'être serré contre une face de serrage (14A) du premier patin (12A).

3. Dispositif de bridage selon la revendication 1, caractérisé en ce qu'il comprend un deuxième patin de serrage (12B) monté de manière excentrée sur une première extrémité d'un tube de pivotement (17) et monté pivotant lui-même autour d'un axe de pivotement (15) du premier patin (12A), un deuxième levier (18) étant monté à sa deuxième extrémité de sorte qu'une pression sur les leviers (18) aboutissent à une pression de chaque patin (12A, 12B) sur une face de la partie libre (1B) de la pièce (1) pour maintenir en quatre points la partie libre (1B) de la pièce (1) entre les patins (12A, 12B)

4. Dispositif de bridage selon la revendication 3, caractérisé en ce que les moyens de blocage comprennent :
- l'épaulement de serrage (13) du socle (11) et dans lequel est monté tournant un axe de pivotement (15) entouré d'un tube de pivotement (17) ;
- une vis de serrage (19) traversant le socle (11), parallèlement aux axes de pivotement (15) et tubes de pivotement (17) ;
- un premier flasque (20A) dans lequel est vissée la vis (19) et susceptible d'être serrée contre une face de serrage (14A) du premier patin (12A) ; et
- un deuxième flasque (20B) libre en translation sur une deuxième extrémité de la vis de serrage (19) près de la tête de celle-ci pour être serré contre une face (14B) du deuxième patin (12B), de manière à serrer au moyen de la vis (19) les patins (12A) et (12B) contre l'épaulement de serrage (13), pour obtenir un bridage à quatre points.

5. Dispositif de bridage selon la revendication 1, caractérisé en ce que, pour obtenir un serrage à deux fois N points, les moyens de serrage comprennent de part et d'autre un nombre déterminé (N-2) de patins supplémentaires (25) montés chacun de manière excentrée sur un tube de pivotement supplémentaire (26) concentrique à un axe de pivotement (15) et à un premier tube de pivotement (17) ;
- les moyens de blocage comprennent de part et d'autre un même nombre déterminé (N-2) d'entretoises de serrage (24), de manière à serrer chaque patin (12A, 12B et 25) contre une entretoise (24), ou l'épaulement de serrage (13).

6. Utilisation d'un dispositif selon l'une quelconque des revendications précédentes pour maintenir une pale (1) de turbomachine déjà maintenue, par son pied (1A), pendant l'usinage final des deux côtés de cette pale (1) par électrochimie.

## Claims

1. A device for clamping a free flat part (1B) of a workpiece (1) in order to completely immobilise the workpiece while it is being treated, the device comprising a base (11),
characterised in that it comprises:
means for multipoint clamping of the free part (1B) at a number of places distributed on either side of the two surfaces of the free part (1B); these clamping means comprise on either side of the free part (1B) of the workpiece (1) a first clamping shoe (12A) eccentrically mounted on a first end of a spindle (15) pivotably mounted in a clamping shoulder (13) of the base (11), a first lever (18) being so disposed at the second end of the spindle (15) that a pressure on the lever (18) leads to the shoe (12A) applying a pressure to one surface of the free part (1B) of the workpiece (1) so as to retain the free part (1B) on the clamping shoulder (13), and
a single means for locking the clamping means in the clamping position.

2. A clamping device according to claim 1, characterised in that the locking means comprise:
a clamping shoulder (13) of the base (11) in which a spindle (15) is rotatably mounted;
a clamping screw (19) extending through the base (11) and parallel to the spindles (15); and
a first cheek (20A) into which the screw (19) is screwed and which is clampable against a clamping surface (14A) of the first shoe (12A).

3. A clamping device according to claim 1, characterised in that it comprises a second clamping shoe (12B) eccentrically mounted on a first end of a pivoting tube (17) pivotable around a spindle (15) of the first shoe (12A), a second lever (18) being so disposed at its second end that a pressure on the levers (18) leads to each shoe (12A, 12B) pressing on a surface of the free part (1B) of the workpiece (1) in order to provide four-point retention of the free part (1B) of the workpiece (1) between the shoes (12A, 12B).

4. A clamping device according to claim 3, characterised in that the locking means comprise:
the clamping shoulder (13) of the base (11) and in which a spindle (15) is rotatably mounted and surrounded by a pivoting tube (17);
a clamping screw (19) which extends through the base (11) parallel to the spindles (15) and pivoting tubes (17);
a first cheek (20A) in which the screw (19) is screwed and which is clampable against a clamping asurface (14A) of the first shoe (12A), and
a second cheek (20B) movable in translation on a second end of the clamping screw (19) near the head thereof in order to be so clamped against a surface (14B) of the second shoe (12B) as to clamp the shoes (12A) and (12B) by means of the screw (19) against the clamping shoulder (13) to provide a four-point clamping.

5. A clamping device according to claim 1, characterised in that to provide a clamping at 2-N points the clamping means comprise on either side a predetermined number (N-2) of supplementary shoes (25) each eccentrically mounted on a supplementary pivoting tube (26) concentric with a spindle (15) and a first pivoting tube (17), and
the locking means comprise on either side the same predetermined number (N-2) of clamping cross-members (24) so as to clamp each shoe (12A, 12B) and (25) against a crosspiece (24) or the clamping shoulder (13).

6. Use of a device according to any of the previous claims to retain a turbomachine blade (1) already retained by way of its root (1A) during final electrochemical machining of both sides of the blade (1).

## Patentansprüche

1. Vorrichtung zum Einspannen eines freien und flachen Teils (1B) eines zu bearbeitenden Werkstücks (1), um dieses Werkstück (1) während einer an ihm auszuführenden Bearbeitung vollkommen bewegunglos zu halten, wobei die Vorrichtung einen Sockel (11) aufweist,
**dadurch gekennzeichnet**, daß sie weiterhin aufweist:
- Mehrpunkt-Spannmittel zum Einspannen des freien Teils (1B) in mehreren auf beiden Seiten des freien Teils (1B) verteilten Punkten, wobei diese Spannmittel zu beiden Seiten des freien Teils (1B) des Werkstücks (1) eine erste Spannkufe (12A) umfassen, die exzentrisch an einem Ende einer Drehachse (15) montiert ist, die ihrerseits in einer Spannschulter (13) des Sockel drehbar montiert ist, ferner einen ersten Hebel (18), der an dem zweiten Ende der Drehachse (15) derart montiert ist, daß ein Druck auf den Hebel (18) einen Druck der Backe (12A) auf eine Seite des freien Teils (1B) des Werkstücks (1) zur Folge hat, so daß der freie Teil (1B) des Werkstücks (1) an der Spannschulter (13) gehalten wird, und
- ein einziges Blockiermittel zum Blockieren der Spannmittel in der Spannposition.

2. Einspannvorrichtung nach Anspruch 1,
**dadurch gekennzeichnet**, daß die Blockiermittel umfassen:
- eine Spannschulter (13) des Sockels (11), in der eine Drehachse (15) drehbar montiert ist,
- eine Spannschraube (19), die den Sockel (11) parallel zu den Drehachsen (15) durchdringt, und
- einen ersten Flansch (20A), in den die Spannschraube (19) eingeschraubt ist und der gegen eine Spannfläche (14A) der ersten Backe (12A) gespannt werden kann.

3. Einspannvorrichtung nach Anspruch 1,
**dadurch gekennzeichnet**,
daß sie eine zweite Spannkufe (12B) aufweist, die exzentrisch auf einem ersten Ende eines Drehrohrs (17) montiert ist, das seinerseits um eine Drehachse (15) der ersten Spannkufe (12A) drehbar montiert ist, ferner einen zweiten Hebel (18), der an dem zweiten Ende des Drehrohrs (17) derart montiert ist, daß ein Druck auf die Hebel (18) einen Druck jeder Kufe (12A, 12B9) auf eine Seite des freien Teils (1B) des Werkstücks (1) zur Folge hat, so daß der freie Teil (1B) des Werkstücks (1) in vier Punkten zwischen den Kufen (12A, 12B) gehalten wird.

4. Einspannvorrichtung nach Anspruch 3,
**dadurch gekennzeichnet**, daß die Blockiermittel umfassen:
- die Spannschulter (13) des Sockels (11), in der eine von einem Drehrohr (17) umgebene Drehachse (15) drehbar montiert ist,
- eine Spannschraube (19), die den Sockel (11) parallel zu den Drehachsen (15) und den Drehrohren (17) durchdringt,
- einen ersten Flansch (20A), in den die Spannschraube (19) eingeschraubt ist und der gegen eine Spannfläche (14A) der ersten Kufe (12A) gespannt werden kann, und
- einen zweiten Flansch (20B), der auf dem zweiten Ende der Spannschraube (19) in der Nähe von deren Kopf frei verschiebbar ist, so daß sie gegen eine Fläche der zweiten Kufe (12B) gespannt werden kann, derart daß die Kufen (12A, 12B) mit Hilfe der Spannschraube (19) gegen die Spannschulter (13) gespannt werden, um eine Vierpunkt-Einspannung zu erzielen.

5. Einspannvorrichtung nach Anspruch 1,
**dadurch gekennzeichnet**,
daß zur Erzielung einer Einspannung in zwei mal N Punkten die Spannmittel auf beiden Seiten eine bestimmte Anzahl (N - 2) zusätzlicher Kufen (25) umfassen, die jeweils exzentrisch auf einem zusätzlichen Drehrohr (26) montiert sind, das konzentrisch zu einer Drehachse (15) und zu einem ersten Drehrohr (17) angeordnet ist,
und daß die Blockiermittel auf beiden Seiten eine gleiche Anzahl (N - 2) von Spannzwischenstücken (24) umfassen, so daß jede Kufe (12A, 12B und 25) gegen ein solches Zwischenstück oder gegen die Spannschulter (13) gespannt wird.

6. Verwendung einer Vorrichtung nach einem der vorhergehenden Ansprüche zum Halten einer an ihrem Fuß (1A) bereits gehaltenen Turbomaschinenschaufel (1) während der elektrochemischen Endbearbeitung der beiden Seiten der Schaufel (1).
